# FASCICULE DE BREVET EUROPEEN

(11) **EP 2 330 731 B1**
(45) Date de publication et mention de la délivrance du brevet: **21.01.2015**
(21) Numéro de dépôt: 10191293.9
(22) Date de dépôt: 16.11.2010
(51) Int. Cl.: H02M 7/162

(54) **Convertisseur de puissance à source de courant utilisant des transistors à effet de champ normalement fermés**
Stromquellenleistungswandler, der Feldeffekttransistoren, die im Normalbetrieb geschlossen sind, benutzt
Current-source power converter using normally-on field effect transistors

(30) Priorité: 03.12.2009 FR 0958615
(43) Date de publication de la demande: 08.06.2011
(73) Titulaire: Schneider Toshiba Inverter Europe SAS, 27120 Pacy sur Eure (FR)
(72) Inventeur: Grbovic, Petar, 27120 Pacy sur Eure (FR)
(74) Mandataire: Bié, Nicolas

(56) Documents cités:
- FRIEDLI T ET AL: "Design and Performance of a 200-kHz All-SiC JFET Current DC-Link Back-to-Back Converter", IEEE TRANSACTIONS ON INDUSTRY APPLICATIONS, IEEE SERVICE CENTER, PISCATAWAY, NJ, US LNKD- DOI:10.1109/TIA.2009.2027538, vol. 45, no. 5, 1 septembre 2009 (2009-09-01), pages 1868-1878, XP011270486, ISSN: 0093-9994

## Description

La présente invention se rapporte à un convertisseur de puissance à source de courant utilisant des transistors à effet de champ normalement fermés. Ce convertisseur de puissance peut être employé dans des applications de type variateur de vitesse, système d'alimentation sécurisé, filtre actif ou convertisseur DC/DC.

De manière connue, à partir d'une source de courant alternatif un convertisseur de puissance à source de courant permet d'obtenir grâce à un module redresseur actif un courant continu constant sur un bus d'alimentation de puissance portant une inductance. Dans une application de type variateur de vitesse, le courant constant circulant sur le bus d'alimentation est ensuite haché par un module onduleur afin d'obtenir un courant de sortie variable destiné à alimenter une charge électrique.

Il est connu de la publication intitulée *"*Design and Performance of a 200 kHz All-SiC JFET Current Source Converter" rédigée par Thomas Friedli, Simon D. round, Dominik Hassler et Johann W. Kolar un convertisseur de puissance à source de courant comportant un module redresseur connecté en amont à plusieurs entrées alimentées par une source de courant, un bus d'alimentation de puissance connecté en aval du redresseur et doté d'une ligne positive et d'une ligne négative, une inductance montée sur la ligne positive et/ou sur la ligne négative du bus d'alimentation et un module onduleur connecté en aval du bus d'alimentation et destiné à appliquer un courant variable à une charge électrique. Le module redresseur comporte plusieurs bras de commutation connectés entre la ligne positive et la ligne négative du bus d'alimentation, chaque bras de commutation comportant deux transistors en série et un point milieu de connexion situé entre les deux transistors et relié à l'une des entrées. Le module onduleur comporte également plusieurs bras de commutation connectés entre la ligne positive et la ligne négative du bus d'alimentation, chaque bras de commutation comportant deux transistors en série et un point milieu de connexion situé entre les deux transistors et relié à la charge électrique à commander. Dans la publication désignée ci-dessus, les transistors du module redresseur et du module onduleur sont des transistors de type JFET normalement fermé en carbure de silicium, c'est-à-dire qu'ils sont conducteurs lorsqu'aucune tension n'est appliquée sur leur grille. Le convertisseur de puissance à source de courant se prête bien à l'emploi de composants normalement fermés car ce type de convertisseur exige que deux transistors restent passants en permanence de manière à ne jamais connecter la source de courant sur un circuit ouvert.

Cependant, avec l'utilisation de composants normalement fermés, il est nécessaire d'éviter de mettre le réseau en court circuit lors du démarrage ou lors de dysfonctionnements du système d'alimentation auxiliaire, celui-ci étant destiné à la commande de grille des transistors.

Dans la publication précitée, pour éviter de mettre le réseau en court-circuit, il a été proposé de positionner sur les phases d'entrée connectées au réseau, en amont du redresseur, des relais commandés à l'état ouvert lors du démarrage. Cette solution n'est cependant pas satisfaisante car les trois relais présents sur les phases d'entrée doivent être dimensionnés pour supporter la totalité du courant provenant du réseau et la totalité de la tension du réseau.

Le but de l'invention est donc de proposer un convertisseur de puissance à source de courant employant des composants normalement fermés et permettant d'éviter de mettre le réseau en court circuit lors du démarrage ou lors de dysfonctionnements éventuels du système d'alimentation auxiliaire destiné à la commande de grille des transistors, ceci sans employer des composants surdimensionnés.

Ce but est atteint par un convertisseur de puissance comportant :
- un module redresseur connecté en amont à plusieurs entrées alimentées par une source de courant,
- un bus d'alimentation de puissance connecté en aval du module redresseur et doté d'une ligne positive et d'une ligne négative,
- une inductance montée sur la ligne positive ou sur la ligne négative du bus d'alimentation,
- le module redresseur comportant plusieurs bras de commutation connectés entre la ligne positive et la ligne négative du bus d'alimentation, chaque bras de commutation comportant un transistor haut et un transistor bas en série et un point milieu de connexion situé entre le transistor haut et le transistor bas et relié à une entrée,
- les transistors étant de type à effet de champ normalement fermés et commandés chacun par un dispositif de commande de grille,
- un interrupteur auxiliaire de type normalement ouvert positionné en série avec les bras de commutation et connecté sur la ligne positive du bus d'alimentation,
- un dispositif de commande de l'interrupteur auxiliaire.

Selon une particularité, le convertisseur comporte un module onduleur connecté en aval du bus d'alimentation et en amont d'une charge électrique à commander.

Selon une autre particularité, chaque transistor est commandé par un dispositif de commande de grille et les dispositifs de commande de grille des transistors hauts sont connectés à la ligne positive du bus d'alimentation.

Selon une autre particularité, le convertisseur comporte un système de protection contre les surtensions monté entre la ligne positive et la ligne négative du bus d'alimentation.

Selon une autre particularité, le convertisseur comporte des moyens de détection d'un dysfonctionnement aptes à coopérer avec le dispositif de commande de l'interrupteur auxiliaire.

Selon une autre particularité, l'interrupteur auxiliaire est un relais électromécanique ou un interrupteur électronique de type MOSFET, BJT ou IGBT.

Selon une autre particularité, les transistors hauts et bas des bras de commutation sont de type JFET.

Selon une autre particularité, les transistors JFET sont fabriqués en carbure de silicium ou nitrure de gallium.

D'autres caractéristiques et avantages vont apparaître dans la description détaillée qui suit en se référant à un mode de réalisation donné à titre d'exemple et représenté par les dessins annexés sur lesquels :
- la figure 1 représente le convertisseur de puissance de l'invention utilisant un module redresseur à base de transistors de type JFET normalement fermé,
- les figures 2A et 2B représentent deux variantes de réalisation distinctes du système de protection contre les surtensions visible sur la figure 1.

L'invention concerne un convertisseur de puissance à source de courant. Le convertisseur de puissance à source de courant de l'invention peut être employé dans des applications de type variateur de vitesse, système d'alimentation sécurisé (UPS pour "Uninterruptible Power Supply"), filtre actif ou convertisseur DC/DC.

Le convertisseur de puissance à source de courant de l'invention comporte donc un module redresseur seul, comme par exemple dans une alimentation électrique, ou l'association d'un module redresseur et d'un module onduleur comme par exemple dans un variateur de vitesse.

Le principe de l'invention consiste à employer dans le module redresseur des transistors à effet de champ de type normalement fermé. Le convertisseur de puissance à source de courant se prête en effet bien à l'emploi de composants normalement fermés. Cependant, cela amène d'autres problèmes qu'il est nécessaire de résoudre. Le premier problème à résoudre apparaît lors du démarrage du convertisseur et le second problème peut apparaître lors d'une défaillance du système d'alimentation auxiliaire utilisé pour fournir une tension de grilles aux transistors. Dans les deux cas, il s'agit d'éviter de mettre le réseau en court-circuit lorsqu'aucune tension de commande ne peut être appliquée sur les grilles des transistors.

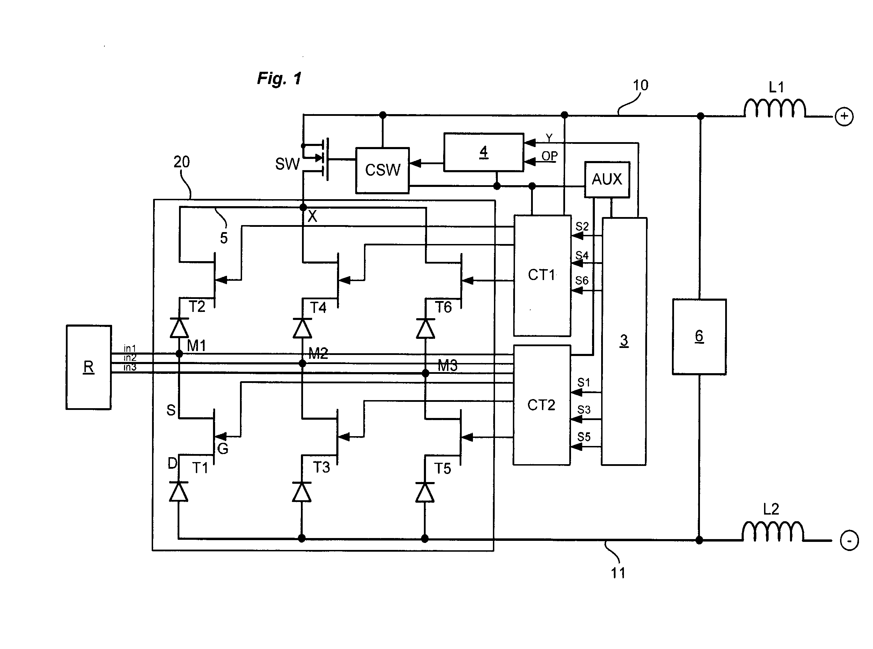

La figure 1 représente un convertisseur de puissance à source de courant comportant plusieurs entrées in1, in2, in3 (par exemple trois entrées sur un réseau triphasé) connectées d'un côté au réseau R et de l'autre côté à un module redresseur 20. Le module redresseur 20 est de type actif et comporte plusieurs bras de commutations, par exemple trois bras de commutation, destinés à transformer en un courant continu constant un courant alternatif appliqué sur les entrées in1, in2, in3 du convertisseur connectées au réseau R. Le courant continu constant obtenu est appliqué sur un bus d'alimentation de puissance doté d'une ligne positive 10 et d'une ligne négative 11. Le convertisseur comporte en outre au moins une inductance L1 montée sur la ligne positive 10 ou sur la ligne négative 11 du bus d'alimentation. Idéalement, le convertisseur peut comporter une première inductance L1 montée sur la ligne positive 10 et une seconde inductance L2 montée sur la ligne négative 11 du bus d'alimentation de puissance (voir figure 1). Les trois bras de commutation du module redresseur 20 sont connectés chacun en parallèle entre la ligne positive 10 et la ligne négative 11 du bus d'alimentation. Chaque bras de commutation comporte un transistor haut T2, T4, T6 et un transistor bas T1, T3, T5 séparés par un point milieu de connexion M1, M2, M3 relié à une entrée in1, in2, in3 distincte du convertisseur. Dans un convertisseur de puissance à source de courant, chaque transistor T1-T6 est monté en série avec une diode.

Selon l'invention, chaque transistor T1-T6 du module redresseur est du type à effet de champ (FET pour "Field Effect Transistor") normalement fermé. Un transistor à effet de champ tel que par exemple un JFET ou un MOSFET est un interrupteur électronique de puissance connu qui comporte une Grille de commande (G) dont la fonction est d'autoriser ou non le passage d'un courant entre un Drain (D) et une Source (S). Un tel transistor est dit de type normalement fermé (ou "Normally ON") si la tension V_{GS} entre la Grille et la Source est proche de zéro. Cela signifie que le chemin Drain-Source est passant ou conducteur en l'absence de tension de commande V_{GS}. En présence d'une tension de commande V_{GS} négative entre sa grille et sa source, le transistor à effet de champ normalement fermé est commandé à l'ouverture. Un transistor de type JFET normalement fermé est commandé à l'ouverture en appliquant une tension grille-source V_{GS} par exemple au moins égale à - 15 Volts et un transistor MOSFET avec une tension V_{GS} par exemple au moins égale à -5 Volts.

Les transistors T1-T6 à effet de champ employés dans le convertisseur de puissance de l'invention seront par exemple fabriqués dans un matériau à grande énergie de bande interdite (appelé également "matériau à grand gap" ou "wide-band gap material") tel que par exemple le carbure de silicium ou le nitrure de gallium. De manière connue, un transistor JFET réalisé dans un matériau à grande énergie de bande interdite et de type normalement fermé présente les avantages d'être plus rapide à commuter, de générer moins de pertes en conduction à l'état passant (faible résistance R_{DSon} à l'état passant), d'avoir une meilleure tenue en température et d'avoir une taille plus petite. Dans la suite de la description et sur la figure 1 annexée, les transistors T1-T6 de la figure 1 sont par exemple de type JFET.

Chaque transistor à effet de champ T1-T6 des bras de commutation est commandé à l'ouverture grâce à un dispositif spécifique de commande de grille CT1, CT2 (schématisé de manière simplifiée sur la figure 1 par deux blocs distincts). Chaque dispositif de commande de grille est alimenté grâce à un système d'alimentation auxiliaire AUX connecté sur les entrées in1, in2, in3 du convertisseur et qui permet d'appliquer au transistor une tension de grille V_{G} pour commander le transistor à la fermeture ou à l'ouverture. En plus de l'alimentation, chaque dispositif de commande reçoit d'un système central de commande 3 des signaux de commande S1 à S6 à modulation de largeur d'impulsion (PWM en anglais pour "Pulse Width Modulation") respectant une loi de commande exécutée par le système central de commande 3. Chaque dispositif de commande des transistors hauts T2, T4, T6 est connecté à la ligne positive 10 du bus d'alimentation de puissance tandis que chaque dispositif de commande des transistors bas T1, T3, T5 est connecté au point milieu de connexion M1, M2, M3 du bras de commutation de son transistor.

Selon l'invention, un interrupteur auxiliaire SW de type normalement ouvert est connecté en série avec les bras de commutation et relie les bras de commutation à la ligne positive 10 du bus d'alimentation. Autrement dit, cet interrupteur auxiliaire SW est connecté entre les transistors hauts T2, T4, T6 du module redresseur 20 et la ligne positive 10 du bus d'alimentation. Sur la figure 1, l'interrupteur auxiliaire SW est connecté en un point X sur une ligne conductrice 5 joignant les drains des trois interrupteurs hauts T2, T4, T6 des trois bras de commutation.

L'interrupteur auxiliaire SW peut être par exemple un relais électromécanique, par exemple un MEMS (pour "Micro Electromechanical System") ou un interrupteur électronique de type MOSFET ("Metal Oxide Semiconductor FET"), IGBT ("Insulated Gate Bipolar Transistor") ou BJT ("Bipolar Junction Transistor"). Sur la figure 1, l'interrupteur auxiliaire est représenté sous la forme d'un MOSFET en silicium. L'interrupteur auxiliaire SW est commandé à la fermeture par un dispositif de commande CSW approprié connu (non détaillé dans la présente demande) commandé par un signal de commande S délivré par un module 4 lorsque différentes conditions sont réunies en même temps, c'est-à-dire lorsque aucun verrouillage pour sous-tension n'est apparu sur le système d'alimentation auxiliaire (UVLO pour "Undervoltage Lockout), lorsque la protection contre les surintensités (OP) n'a pas été activée et lors de la présence d'un signal Y provenant du système central de commande 3.

Bien entendu, pour un fonctionnement équivalent, il est tout à fait possible de remplacer l'interrupteur auxiliaire SW commun aux trois bras de commutation par un interrupteur auxiliaire SW connecté en série sur chaque bras de commutation, ces interrupteurs auxiliaires étant tous commandés simultanément. Ce mode de réalisation n'est pas représenté sur les figures annexées mais il rentre parfaitement dans le cadre de l'invention.

Le convertisseur de puissance à source de courant représenté en figure 1 peut comporter en aval de son bus d'alimentation un module onduleur (non représentée sur la figure 1) destiné à hacher le courant continu circulant sur le bus pour créer un courant variable destiné à alimenter une charge électrique. Dans ce cas, il s'agira par exemple d'une application de type variateur de vitesse.

Par ailleurs, le convertisseur de puissance à source de courant peut comporter un système de protection 6 contre les surtensions monté entre la ligne positive 10 et la ligne négative 11 du bus d'alimentation de puissance. Ce système 6 est destiné à empêcher les surtensions et ainsi à protéger le module redresseur 20 lorsque l'interrupteur auxiliaire SW est commandé à l'ouverture alors que le courant circulant sur le bus n'est pas encore nul. Dans cette situation la tension aux bornes du système de protection 6 a tendance à devenir négative ce qui permet de débloquer le système de protection 6 qui peut alors fournir un chemin de passage pour le courant entre la ligne positive 10 et la ligne négative 11 du bus d'alimentation.

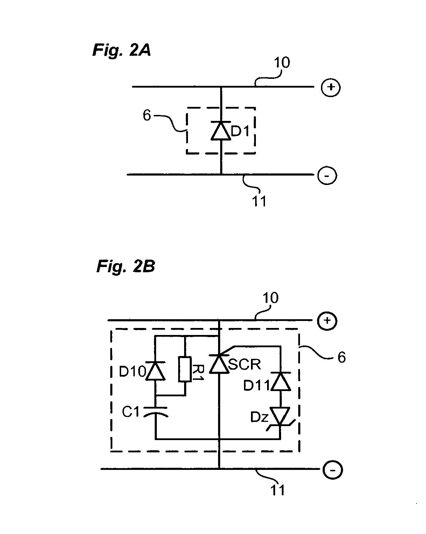

Dans une première variante de réalisation représentée en figure 2A, le système de protection 6 contre les surtensions peut être une simple diode D1 montée passante de la ligne négative 11 vers la ligne positive 10 du bus d'alimentation et qui lorsque la tension devient négative permet au courant de circuler de la ligne positive 10 vers la ligne négative 11 du bus d'alimentation.

Dans une seconde variante de réalisation représentée en figure 2B, le système de protection 6 contre les surtensions comporte un thyristor SCR monté entre la ligne positive 10 et la ligne négative 11 du bus d'alimentation. Dans cette variante, le système 6 comporte en outre un premier ensemble composé d'un condensateur C1 et d'une première diode D10 en série et monté en parallèle du thyristor SCR entre son anode et sa cathode. Par ailleurs, le système comporte en outre un second ensemble composé d'une seconde diode D11 et d'une diode Zener Dz en opposition et monté en parallèle du thyristor SCR entre sa gâchette et son anode. Une résistance R1 est également montée en parallèle de la première diode D10. Lorsque la tension aux bornes du système de protection devient négative, le condensateur se charge. Lorsque la tension aux bornes de la diode Zener Dz atteint une valeur maximale, le courant peut traverser les deux diodes D11, Dz en série et actionner le thyristor SCR qui peut alors laisser passer le courant de la ligne positive 10 vers la ligne négative 11 du bus d'alimentation.

Le fonctionnement du convertisseur de puissance de l'invention muni de l'interrupteur auxiliaire SW est explicité ci-dessous.

Au démarrage, le système d'alimentation auxiliaire AUX n'est pas encore activé et ne peut donc fournir une tension suffisante en vue du blocage des transistors T1-T6 du module redresseur 20. L'interrupteur auxiliaire SW étant initialement ouvert, le courant ne peut donc pas traverser les bras de commutation du module redresseur et mettre le réseau R en court-circuit.

Après un certain délai, le système d'alimentation auxiliaire AUX a terminé son démarrage et permet d'alimenter les dispositifs de commandes CT1, CT2 des transistors T1-T6 du module redresseur 20. Les transistors T1-T6 peuvent donc être commandés directement à l'ouverture par leur dispositif de commande CT1, CT2. L'interrupteur auxiliaire SW est commandé à la fermeture par son dispositif de commande CSW et le convertisseur de puissance peut alors fonctionner normalement.

Lors du fonctionnement normal du convertisseur de puissance, un dysfonctionnement peut se produire, par exemple au niveau du système d'alimentation auxiliaire AUX. Dans cette situation, les transistors T1-T6 du module de commutation ne peuvent plus être commandés à l'ouverture. Comme représenté sur la figure 1, lors de la détection d'un dysfonctionnement, le signal de commande Y ne peut plus être généré à destination du dispositif de commande CSW de l'interrupteur auxiliaire SW. L'interrupteur auxiliaire SW est donc commandé à l'ouverture. De cette manière, comme précédemment, le courant ne peut donc pas traverser les bras de commutation du module redresseur 20 et mettre le réseau R en court-circuit.

L'intérêt de l'invention réside notamment dans le fait d'employer un seul interrupteur auxiliaire SW pour gérer les problématiques évoquées. Par ailleurs il n'est pas nécessaire de le dimensionner pour supporter toute la tension appliquée en entrée. L'interrupteur auxiliaire SW doit être dimensionné pour supporter la totalité du courant mais peut être dimensionné pour supporter une tension réduite par rapport à la tension maximale.

## Revendications

1. Convertisseur de puissance comportant :
- un module redresseur (20) connecté en amont à plusieurs entrées (in1, in2, in3) alimentées par une source de courant,
- un bus d'alimentation de puissance connecté en aval du module redresseur (20) et doté d'une ligne positive (10) et d'une ligne négative (11),
- une inductance (L1, L2) montée sur la ligne positive (10) ou sur la ligne négative (11) du bus d'alimentation,
- le module redresseur (20) comportant plusieurs bras de commutation connectés entre la ligne positive (10) et la ligne négative (11) du bus d'alimentation, chaque bras de commutation comportant un transistor haut (T2, T4, T6) et un transistor bas (T1, T3, T5) en série et un point milieu de connexion (M1, M2, M3) situé entre le transistor haut et le transistor bas et relié à une entrée (in1, in2, in3),
- les transistors (T1-T6) étant de type à effet de champ normalement fermés et commandés chacun par un dispositif de commande de grille (CT1, CT2),
**caractérisé en ce que** le convertisseur de puissance comporte :
- un interrupteur auxiliaire (SW) de type normalement ouvert positionné en série avec les bras de commutation et connecté sur la ligne positive (11) du bus d'alimentation,
- un dispositif de commande (CSW) de l'interrupteur auxiliaire (SW).

2. Convertisseur de puissance selon la revendication 1, **caractérisé en ce qu'**il comporte un module onduleur connecté en aval du bus d'alimentation et en amont d'une charge électrique à commander.

3. Convertisseur de puissance selon la revendication 1 ou 2, **caractérisé en ce que** chaque transistor est commandé par un dispositif de commande de grille et **en ce que** les dispositifs de commande de grille des transistors hauts (T2, T4, T6) sont connectés à la ligne positive (10) du bus d'alimentation.

4. Convertisseur de puissance selon l'une des revendications 1 à 3, **caractérisé en ce qu'**il comporte un système de protection (6) contre les surtensions monté entre la ligne positive (10) et la ligne négative (11) du bus d'alimentation.

5. Convertisseur de puissance selon l'une des revendications 1 à 4, **caractérisé en ce qu'**il comporte des moyens de détection d'un dysfonctionnement aptes à coopérer avec le dispositif de commande (CSW) de l'interrupteur auxiliaire (SW).

6. Convertisseur de puissance selon l'une des revendications 1 à 5, **caractérisé en ce que** l'interrupteur auxiliaire (SW) est un relais électromécanique ou un interrupteur électronique de type MOSFET, BJT ou IGBT.

7. Convertisseur de puissance selon l'une des revendications 1 à 6, **caractérisé en ce que** les transistors hauts et bas des bras de commutation sont de type J FET.

8. Convertisseur de puissance selon la revendication 7, **caractérisé en ce que** les transistors JFET sont fabriqués en carbure de silicium ou nitrure de gallium.

## Patentansprüche

1. Leistungsumsetzer, der Folgendes umfasst:
- ein Gleichrichtermodul (20), das mehreren Eingänge (in1, in2, in3), die durch eine Stromquelle versorgt werden, vorgeschaltet ist,
- einen Leistungsversorgungsbus, der dem Gleichrichtermodul (20) nachgeschaltet ist und mit einer positiven Leitung (10) und einer negativen Leitung (11) versehen ist,
- eine Induktivität (L1, L2), die in die positive Leitung (10) oder die negative Leitung (11) des Versorgungsbusses geschaltet ist,
- wobei das Gleichrichtermodul (20) mehrere Kommutationszweige aufweist, die zwischen die positive Leitung (10) und die negative Leitung (11) des Versorgungsbusses geschaltet sind, wobei jeder Kommutationszweig einen oberen Transistor (T2, T4, T6) und einen unteren Transistor (T1, T3, T5), die in Serie geschaltet sind, und einen Anschlussmittelpunkt (M1, M2, M3), der sich zwischen dem oberen Transistor und dem unteren Transistor befindet und mit einem Eingang (in1, in2, in3) verbunden ist, umfasst,
- wobei die Transistoren (T1-T6) vom normalerweise gesperrten Feldeffekt-Typ sind und jeweils durch eine Gate-Steuervorrichtung (CT1, CT2) gesteuert werden,
**dadurch gekennzeichnet, dass** der Leistungsumsetzer Folgendes umfasst:
- einen Hilfsschalter (SW) des normalerweise geöffneten Typs, der in Serie mit den Kommutationszweigen geschaltet und an die positive Leitung (11) des Versorgungsbusses angeschlossen ist,
- eine Steuervorrichtung (CSW) des Hilfsschalters (SW).

2. Leistungsumsetzer nach Anspruch 1, **dadurch gekennzeichnet, dass** er ein Wechselrichtermodul umfasst, das dem Versorgungsbus nachgeschaltet und einer zu steuernden elektrischen Last vorgeschaltet ist.

3. Leistungsumsetzer nach Anspruch 1 oder 2, **dadurch gekennzeichnet, dass** jeder Transistor durch eine Gate-Steuervorrichtung gesteuert wird und dass die Gate-Steuervorrichtungen der oberen Transistoren (T2, T4, T6) an die positive Leitung (10) des Versorgungsbusses angeschlossen sind.

4. Leistungsumsetzer nach einem der Ansprüche 1 bis 3, **dadurch gekennzeichnet, dass** er ein System (6) zum Schutz vor Überspannungen umfasst, das zwischen die positive Leitung (10) und die negative Leitung (11) des Versorgungsbusses geschaltet ist.

5. Leistungsumsetzer nach einem der Ansprüche 1 bis 4, **dadurch gekennzeichnet, dass** er Mittel zum Detektieren einer Fehlfunktion umfasst, die mit der Steuervorrichtung (CSW) des Hilfsschalters (SW) zusammenwirken können.

6. Leistungsumsetzer nach einem der Ansprüche 1 bis 5, **dadurch gekennzeichnet, dass** der Hilfsschalter (SW) ein elektromechanisches Relais oder ein elektronischer Schalter des Typs MOSFET, BJT oder IGBT ist.

7. Leistungsumsetzer nach einem der Ansprüche 1 bis 6, **dadurch gekennzeichnet, dass** die oberen und unteren Transistoren der Kommutationszweige vom JFET-Typ sind.

8. Leistungsumsetzer nach Anspruch 7, **dadurch gekennzeichnet, dass** die JFET-Transistoren aus Siliciumcarbid oder Galliumnitrid hergestellt sind.

## Claims

1. Power converter comprising :
- a rectifier module (20) connected upstream to several inputs (in1, in2, in3) supplied by a current source;
- a power supply bus connected downstream of the rectifier module (20) and provided with a positive line (10) and a negative line (11);
- an inductor (L1, L2) connected to the positive line (10) or to the negative line (11) of the power supply bus;
- the rectifier module (20) comprising several switching legs connected between the positive line (10) and the negative line (11) of the power supply bus, each switching leg comprising a top transistor (T2, T4, T6) and a bottom transistor (T1, T3, T5) in series and a connection middle-point (M1, M2, M3) located between the top transistor and the bottom transistor and linked to an input (in1, in2, in3);
- the transistors (T1 - T6) being normally-on field effect transistors and each being controlled by a gate control device (CT1, CT2),
**characterized in that** the power converter comprises:
- a normally-open auxiliary switch (SW) placed in series with the switching legs and connected to the positive line (11) of the power supply bus;
- a control device (CSW) for controlling the auxiliary switch (SW).

2. Power converter according to Claim 1, **characterized in that** it comprises an inverter module connected downstream of the power supply bus and upstream of an electrical load to be controlled.

3. Power converter according to Claim 1 or 2, **characterized in that** each transistor is controlled by a gate control device and **in that** the gate control devices for the top transistors (T2, T4, T6) are connected to the positive line (10) of the power supply bus.

4. Power converter according to one of Claims 1 to 3, **characterized in that** it comprises an overvoltage protection system (6) connected between the positive line (10) and the negative line (11) of the power supply bus.

5. Power converter according to one of Claims 1 to 4, **characterized in that** it comprises means for detecting a malfunction designed to interact with the control device (CSW) for the auxiliary switch (SW).

6. Power converter according to one of Claims 1 to 5, **characterized in that** the auxiliary switch (SW) is an electromechanical relay or a MOSFET, BJT or IGBT electronic switch.

7. Power converter according to one of Claims 1 to 6, **characterized in that** the top and bottom transistors of the switching legs are JFETs.

8. Power converter according to Claim 7, **characterized in that** the JFET transistors are fabricated from silicon carbide or gallium nitride.
